# EUROPÄISCHE PATENTSCHRIFT

(11) **EP 1 790 450 B1**
(45) Veröffentlichungstag und Bekanntmachung des Hinweises auf die Patenterteilung: **11.02.2009**
(21) Anmeldenummer: 06024307.8
(22) Anmeldetag: 23.11.2006
(51) Int. Cl.: B29C 33/44, B29C 51/34, B29L 31/10

(54) **Vorrichtung zum Vakuumformen einer mit Hinterschneidungen Trägerplatte aus einer Kunststofffolie**
Device for vacuum forming a plastic supporting plate having undercuts
Appareil de formage sous vide d'une plaque support en plastique présentant des contres-dépouilles

(30) Priorität: 24.11.2005 DE 102005056390
(43) Veröffentlichungstag der Anmeldung: 30.05.2007
(73) Patentinhaber: Witech Kunststoff GmbH, 48455 Bad Bentheim (DE)
(72) Erfinder: Wischemann, Ingo, 48807 Ochtrup (DE)
(74) Vertreter: Maser, Jochen

(56) Entgegenhaltungen:
- EP-A- 1 129 964
- WO-A-01/17753
- WO-A1-20/04005148
- DE-A1- 10 010 341
- US-A1- 3 618 170

## Beschreibung

Die Erfindung betrifft eine Vorrichtung zum Vakuumformen einer Trägerplatte aus einer Kunststofffolie mit aus einer Auflageebene hervorstehenden, zumindest eine Hinterschneidung aufweisenden Erhebung gemäß dem Oberbegriff des Anspruchs 1.

Aus der DE 100 10 341 A1 geht eine Vorrichtung zum Vakuumverformen einer Trägerplatte aus einer Kunststofffolie mit aus einer Auflageebene hervorstehenden, zumindest eine Hinterschneidung aufweisenden Erhebung hervor. Diese Vorrichtung umfasst eine Basisplatte, die zumindest einen Formzapfen aufweist, der aus einem mit der Basisplatte verbundenen Grundkörper und aus zumindest einem beweglich in dem Grundkörper aufgenommenen Formvorsprung gebildet ist. Der zumindest eine Formvorsprung steht in einer Arbeitsposition gegenüber einer äußeren Mantelfläche des Grundkörpers nach außen vor. Der Formvorsprung ist zwischen dem Grundkörper und einer Niederhalteeinrichtung eingesetzt und dazwischen derart geführt, dass der Formvorsprung zwischen einer Arbeitsposition und einer Entformungsposition in der zwischen dem Grundkörper und der Niederhalteeinrichtung gebildeten Führung positionierbar ist. Dabei wandert der Formvorsprung beim Überführen in eine Entformungsposition radial nach innen. In einer Arbeitsposition wird der Formvorsprung, der als ringförmiges Gummielement ausgebildet ist, zwischen der Niederhalteeinrichtung und dem Grundkörper in einer radial äußeren Position unter Druck gehalten. Beim Entformen tritt zumindest geringfügig eine Quetschbewegung des ringförmigen Formvorsprunges auf.

Aus der EP 0 581 092 B1 ist eine Vorrichtung zum Vakuumformen einer Zapfenplatte aus einer Kunststofffolie bekannt geworden, die eine Basisplatte umfasst, auf der eine Vielzahl von Formzapfen für die zu bildenden Erhebungen einer Trägerplatte aus Kunststofffolie vorgesehen sind. An einem Grundkörper des Formzapfens ist jeweils eine biegeelastische Scheibe angebracht, die durch ein Befestigungselement zum Grundkörper des Formzapfens niedergehalten ist. Die biegeelastische Scheibe weist Vorsprünge auf, die radial nach außen über die Mantelfläche des Grundkörpers hinausragen. Beim Vakuumformen einer Trägerplatte aus einer Kunststofffolie werden durch die Vorsprünge der biegeelastischen Scheibe Erhebungen mit Hinterschneidungen gebildet. Beim Abziehen beziehungsweise Entformen der Trägerplatte nach deren Herstellung können die Vorsprünge der biegeelastischen Scheibe nach oben ausgelenkt werden, so dass ein einfaches Abheben genügt, damit die Vorsprünge aus der Hinterschneidung freikommen.

Aus der DE 38 14 999 A1 geht des Weiteren eine Vorrichtung zum Tiefziehen von stapelbaren Paletten hervor, die einen Boden aufweisen, dessen Rand mit hinterschnittenen Wülsten ausgebildet ist. Zur Herstellung dieser Paletten ist eine Vorrichtung vorgesehen, bei der an einem Grundkörper simsartig überstehende Leisten zur Ausbildung dieser hinterschnittenen Wülste vorgesehen sind. Diese Wülste sind durch eine feste Drehachse schwenkbar zum Grundkörper gelagert und umfassen eine Zugfeder, die nach dem Ausformen der Palette die Leiste in eine Arbeitsposition zurückführt.

Aus der FR 2 187 512 geht des Weiteren eine Anordnung zur Herstellung einer Trägerplatte aus einer Kunststofffolie hervor, die Vertiefungen mit Hinterschneidungen umfasst. Hierfür sind kegelstumpfförmige Grundkörper vorgesehen, die Vorsprünge aufweisen, welche in einer Arbeitsposition gegenüber der Kegelmantelfläche des kegelstumpfförmigen Grundkörpers radial nach außen vorstehen und in einer Entformungsposition bündig zur Kegelmantelfläche in Anlage gebracht werden. Diese Vorsprünge sind durch eine feste Drehachse schwenkbar gelagert und werden über eine Schraubspindel betätigt.

Aus der DE 33 03 913 A1 ist des Weiteren eine Anordnung zum Umformen von Kunststoffteilen mit einem geteilten hinterschnittenen Umformwerkzeug bekannt, dessen Werkzeugteilstücke entlang einer Trennfuge aneinander liegen, die oberhalb und unterhalb der Hinterschneidungen austritt. Diese Werkzeugteilstücke sind während des Umformens in einer die Hinterschneidung bildenden Stellung miteinander verriegelt.

Nach dem Umformen des Werkstückes bedarf es einer Entriegelung der Werkstückteile, bevor eine Entnahme des umgeformten Werkstückes ermöglicht ist.

Der Erfindung liegt die Aufgabe zugrunde, eine Vorrichtung zur Herstellung einer Trägerplatte aus einer Kunststofffolie mit aus einer Auflageebene hervorstehenden, zumindest eine Hinterschneidung aufweisenden Erhebungen vorzuschlagen, die einen konstruktiv einfachen Aufbau aufweist, ein leichtes Entformen ermöglicht sowie beim Vakuumformen eine exakte Positionierung der Vorsprünge zum Grundkörper sicherstellt.

Diese Aufgabe wird erfindungsgemäß durch eine Vorrichtung gemäß den Merkmalen des Anspruchs 1 ermöglicht. Weitere vorteilhafte Ausgestaltungen und Weiterbildungen der Erfindung sind in den weiteren Ansprüchen angegeben.

Die erfindungsgemäße Ausgestaltung von Formvorsprüngen, die lose in jeweils einer Führung eines Grundkörpers eingesetzt sind und sowohl in einer Arbeitsposition beim Vakuumformen einer Trägerplatte aus einer Kunststofffolie als auch beim Entformen der fertiggestellten Trägerplatte durch eine Niederhalteeinrichtung in der jeweiligen Führung positioniert bleiben, wobei die Führung der Formvorsprünge im Grundkörper in Entformungsrichtung zum Entformen der Trägerplatte ausgerichtete und parallel zueinander angeordnete Führungsflächen umfassen, innerhalb deren der Formvorsprung verschiebbar und/oder schwenkbeweglich geführt ist, weist den Vorteil auf, dass auch bei größeren, auf die Formvorsprünge wirkenden Kräften während dem Vakuumformen eine Arbeitsposition sicher eingenommen werden kann und anschließend ein leichtes Entformen der Trägerplatte ermöglicht ist. Darüber hinaus weisen die lose in die Führung eingesetzten Formvorsprünge den Vorteil auf, dass eine zumindest geringe Schwenkbewegung und/oder Verschiebebewegung der Formvorsprünge beim Entformen der Trägerplatte erzielt wird, sobald die Mantelfläche der Erhebungen an den Formvorsprüngen vorbeigeführt wird, so dass eine einfache und schnelle Montage gegeben ist. Zudem kann ein Grundkörper in einfacher Weise mit andersartig in der Geometrie ausgebildeten Formvorsprüngen bestückt werden. Gleichzeitig eignet sich diese erfindungsgemäße Vorrichtung sowohl zum Einsatz bei der diskontinuierlichen Herstellung als auch bei der kontinuierlichen Herstellung, bei der die Basisplatte auf einer umlaufenden Trommel aufgebracht ist.

Der Niederhalter weist bevorzugt eine Stirnplatte auf, welche die Formvorsprünge teilweise übergreift und an einem sich in den Grundkörper erstreckenden Schaft vorgesehen ist. Dadurch ist eine konstruktiv einfache Ausgestaltung vorgesehen, durch welche alle an dem Grundkörper vorgesehenen Formvorsprünge gleichmäßig und gleichzeitig niedergehalten werden können, und zwar sowohl in einer Arbeitsposition als auch in einer Entfernungsposition während dem Entformen der Trägerplatte. Die Niederhalteeinrichtung ist dabei bevorzugt in Entformungsrichtung zumindest geringfügig bewegbar, so dass die Formvorsprünge zum Freikommen aus den Hinterschneidungen in Richtung auf eine Längsmittelachse des Formzapfens schwenkbar oder in diese Richtung verschiebbar sind oder eine Überlagerung der Bewegungsrichtungen erfahren.

Bevorzugt ist vorgesehen, dass die Niederhalteeinrichtung einen die Stirnplatte tragenden Schaft umfasst, der den Grundkörper und die Basisplatte vollständig durchquert und an dessen freien Ende ein Niederhalteelement angreift. Dadurch kann ein kompakter Aufbau vorgesehen sein. Gleichzeitig kann ermöglicht werden, dass durch eine Bohrung im Grundkörper und der Basisplatte, durch die der Schaft hindurchgeführt ist, ein Vakuum angesaugt werden kann, um die gleichmäßige und formgenaue Herstellung der Erhebungen zu ermöglichen.

Das Niederhalteelement ist nach einer bevorzugten Ausführungsform als Federelement, vorzugsweise als Druckfeder, ausgebildet. Dadurch kann ein selbständiges Zurücksetzen der Formvorsprünge aus einer Entformungsposition in eine Arbeitsposition erfolgen. Gleichzeitig werden die Formzapfen in der Arbeitsposition positioniert, so dass eine gleichmäßige Qualität der Erhebungen sichergestellt ist.

Die Niederhalteeinrichtung begrenzt bevorzugt mit ihrem Schaft, der in einer Längsmittelachse des Grundkörpers angeordnet ist und diesen durchquert, die Führung jedes Formkörpers zur Längsmittelachse hin. Dadurch hat der Schaft eine doppelte Funktion. Zum Einen wird die Niederhaltefunktion über die Stirnplatte erfüllt und zum Anderen eine in die Führung in Richtung zur Längsmittelachse eintauchende Bewegung der Formvorsprünge begrenzt.

Zur Aufnahme des Formvorsprungs weist die Führung im Grundkörper bevorzugt eine Auflagefläche auf, die von einer freistehenden Nase des Formvorsprungs aus zur Längsmittelachse gesehen auf die Basis geneigt ist. Eine Abstützfläche des Formvorsprunges stützt sich in einer Arbeitsposition auf der Auflagefläche ab. Dadurch kann eine stabile Anordnung und sichere Anlage der Formvorsprünge am Grundkörper in der Arbeitsposition gegeben sein. Gleichzeitig bildet diese Auflagefläche einen Anschlag zur radial nach außen gerichteten Schwenkbewegung der Formvorsprünge.

Zur erleichterten schwenkbeweglichen Anordnung der lose in den Führungen angeordneten Formvorsprüngen ist nach einer vorteilhaften Ausführungsform der Erfindung vorgesehen, dass zum innenliegenden Ende der Führung weisend, welches zwischen dem Auflageabschnitt und dem Schaft der Niederhalteeinrichtung gebildet ist, an den Formvorsprüngen ein gerundeter Übergangsbereich vorgesehen ist, der eine Abstützfläche mit einer gegenüberliegenden Anlagefläche des Formvorsprunges verbindet. Dadurch kann ein Abrollen um einen zumindest geringen Schwenkwinkel begünstigt werden.

Zwischen der Auflagefläche der Führung und dem Schaft der Niederhalteeinrichtung ist bevorzugt ein keilförmiger Bewegungsraum für die Formvorsprünge ausgebildet, dessen Anlagefläche und Abstützfläche in einem Winkel angeordnet sind, der kleiner als der Winkel des keilförmigen Bewegungsraumes ausgebildet ist. Dadurch wird zum Einen sichergestellt, dass beim Vakuumformen eine Selbstzentrierung der Formvorsprünge in dem Grundkörper gegeben ist. Zum Anderen kann die maximale Schwenkbeweglichkeit der Formvorsprünge durch die Größe des Winkels zwischen der Anlagefläche und der Abstützfläche bestimmt und begrenzt werden.

Die Formvorsprünge weisen bevorzugt außerhalb der Führung im Grundkörper an die Geometrie der Hinterschneidung angepasste Freiformen auf. Diese gegenüber dem Grundkörper hervorstehende Nase zur Bildung der Hinterschneidung an der Trägerplatte kann in der Geometrie an die ästhetischen Ansprüche und/oder an die Funktion der Hinterschneidung zur Aufnahme von Schläuchen, Rohrleitungen oder dergleichen, zur Bildung von Verhakungseffekten mit weiteren Materialien oder Komponenten ausgebildet sein.

Nach einer weiteren bevorzugten Ausgestaltung der Erfindung ist vorgesehen, dass zwei benachbart zueinander angeordnete und aneinander grenzende, in Entformungsrichtung verlaufende Führungsflächen von zwei benachbarten Führungen am Grundkörper eine Säule ausbilden, an deren Stirnfläche die Stirnplatte der Niederhalteeinrichtung in einer Arbeitsposition anliegt. Dadurch kann eine definierte Anlagefläche geschaffen werden, welche die Arbeitsposition der Formvorsprünge bestimmt. Gleichzeitig kann dadurch eine einfache Einstellung der Niederhaltekraft für das Niederhalteelement ermöglicht sein.

Die Formvorsprünge weisen bevorzugt zu deren Nase weisende Angriffsflächen auf, die sich unterhalb der Stirnplatte der Niederhalteeinrichtung in einer Arbeitsposition und einer Entfernungsposition erstrecken. Dadurch ist in beiden Endpositionen sowie in den dazwischen liegenden Übergangsbereichen sichergestellt, dass die Formvorsprünge in den Führungen gehalten werden. Darüber hinaus kann dadurch ein gesichertes Niederhalten der Formvorsprünge in einer Arbeitsposition gegeben sein.

Im Übergangsbereich zwischen dem Grundkörper und der Basisplatte sind bevorzugt eine Vielzahl von kleinen Durchgangsbohrungen ausgebildet. Dadurch wird eine Verformung der zugeführten Trägerplatte zur Ausbildung von Erhebungen mit Hinterschneidungen unterstützt.

Bevorzugt ist vorgesehen, dass die Durchgangsbohrung in der Basisplatte als Führung für den Schaft der Niederhalteeinrichtung ausgebildet ist. Dadurch kann eine einfache Entformung erzielt werden.

Nach einer weiteren bevorzugten Ausgestaltung der Erfindung ist vorgesehen, dass im Schaft der Niederhalteeinrichtung zumindest abschnittsweise ein elastisches Element, vorzugsweise ein Schaumstoff, vorgesehen ist. Dadurch kann eine gezielte Führung der Formvorsprünge beim Überführen aus einer Arbeitsposition in eine Entformungsposition ermöglicht sein. Zusätzlich kann die Rückführung der Formvorsprünge in eine Arbeitsposition unterstützt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Figur 1: eine schematische Schnittdarstellung eines Formzapfens der erfindungsgemäßen Vorrichtung unmittelbar nach dem Vakuumformen einer Trägerplatte,
- Figur 2: eine schematische Schnittdarstellung eines Grundkörpers von einem Formzapfen der erfindungsgemäßen Vorrichtung,
- Figur 3: eine schematische Ansicht von oben auf den Grundkörper, der auf der Basisplatte angeordnet ist,
- Figur 4: eine schematische Ansicht von oben auf einen Formzapfen der erfindungsgemäßen Vorrichtung und
- Figur 5: eine schematische Schnittdarstellung der erfindungsgemäßen Vorrichtung gemäß Figur 1 während eines Entformungsvorganges.

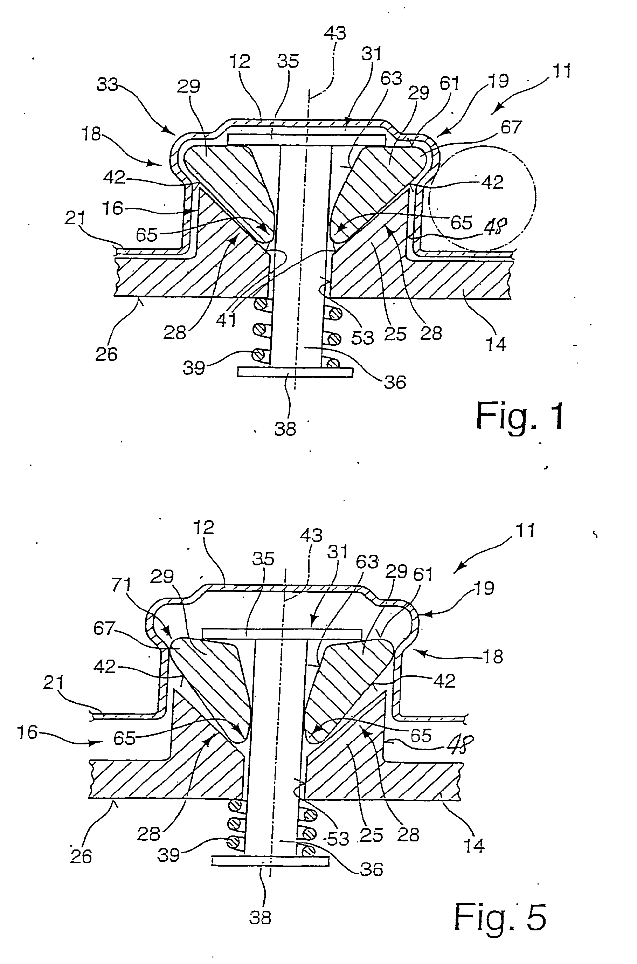

Figur 1 zeigt eine Teilansicht im Vollquerschnitt einer erfindungsgemäßen Vorrichtung 11 zum Vakuumformen einer Trägerplatte 12 aus einer Kunststofffolie. Diese Vorrichtung 11 umfasst eine Basisplatte 14, von der aus sich ein Formzapfen 16 erhebt, um in die Trägerplatte 12 beim Vakuumverformen oder Tiefziehen Erhebungen 18 mit Hinterschneidungen 19 auszubilden, wobei die Erhebungen 18 gegenüber einer Auflageebene 21 der Trägerplatte 12 hervorstehen. Eine solche Trägerplatte 12 umfasst üblicherweise eine Vielzahl von zumeist in einem Raster angeordneten Erhebungen 18.

Der Formzapfen 16 umfasst einen Grundkörper 25, der gemäß dem Ausführungsbeispiel einstückig mit der Basisplatte 14 verbunden ist. Alternativ kann dieser Grundkörper 25 auch durch eine lösbare Verbindung, wie beispielsweise eine Schraubverbindung, von einer Unterseite 26 der Basisplatte 14 als auch deren Oberseite, befestigt sein. Der Grundkörper 25 nimmt in Führungen 28 Formvorsprünge 29 auf, die zur Bildung der Hinterschneidungen 19 in den Erhebungen 18 vorgesehen sind. Über eine Niederhalteeinrichtung 31 sind die Formvorsprünge 29 in einer Arbeitsposition 33 gemäß Figur 1 positioniert. Die Niederhalteeinrichtung 31 umfasst eine Stirnplatte 35, welche die Formvorsprünge 29 zumindest teilweise übergreift sowie einen an der Stirnplatte 35 angreifenden Schaft 36, der sich vollständig durch den Grundkörper 35 und die Basisplatte 14 hindurch zur Unterseite 26 erstreckt. An einem aus der Unterseite 26 herausragenden Ende des Schaftes 36 ist ein Befestigungsabschnitt 38 vorgesehen, an dem ein Niederhalteelement 39 angreift und sich an der Unterseite 26 der Basisplatte 14 abstützt. Dieses Niederhalteelement 39 ist bevorzugt als Druckfeder ausgebildet. Des Weiteren können elastisch verformbare Elemente vorgesehen sein, die eine Rückstellkraft als auch einen Hubweg bewirken können, damit die Niederhalteeinrichtung 31 selbständig in eine Ausgangsposition zurückkehrt und die Formvorsprünge 29 in der Arbeitsposition 33 hält. Alternativ kann anstelle des Niederhalteelementes 39 in Form eines federelastischen oder gummielastischen Elementes auch ein mechanischer Antrieb vorgesehen sein, der die Niederhalteeinrichtung 31 bewegbar antreibt.

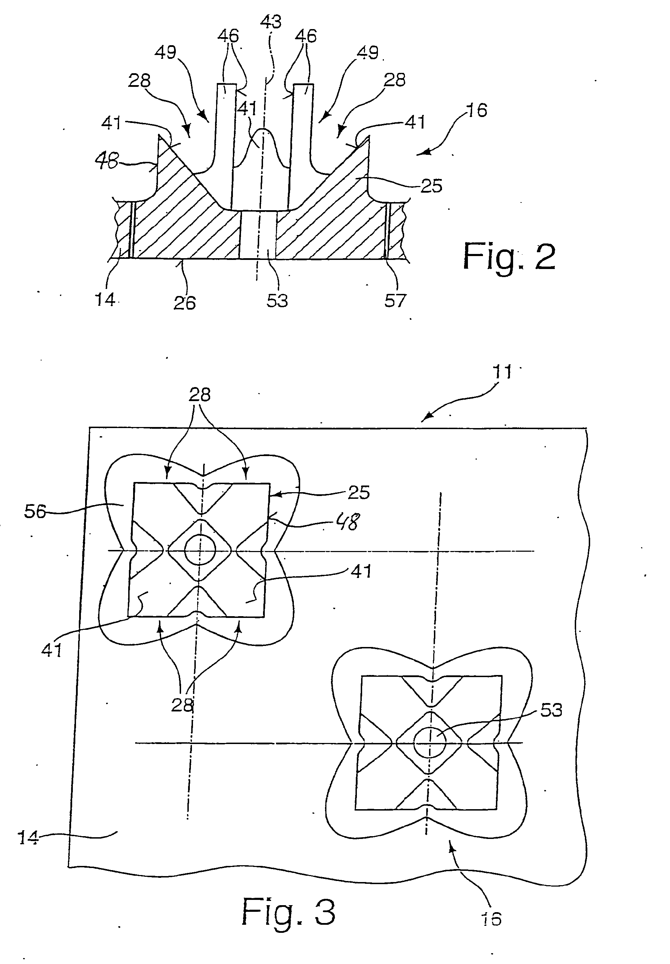

In Figur 2 ist schematisch im Vollquerschnitt ein auf der Basisplatte 14 vorgesehener Grundkörper 25 dargestellt. In diesem Ausführungsbeispiel sind vier Führungen 28 zur Aufnahme von jeweils einem Formvorsprung 29 vorgesehen, die jeweils um 90° zueinander versetzt in dem Grundkörper 25 angeordnet sind. Dies ist nur beispielhaft. Es können anwendungsbedingt nur ein oder eine beliebige Anzahl von Führungen 29 in dem Grundkörper 25 vorgesehen sein und/oder die Winkelanordnung zueinander verschieden sein, wobei prinzipiell der selbe Aufbau zur Aufnahme der Formvorsprünge 29 in der jeweiligen Führung 28 vorgesehen ist.

Die Führung 28 umfasst eine Auflagefläche 41, an der eine Abstützfläche 42 des Formvorsprunges 29 in einer Arbeitsposition 33 anliegt. Diese Auflagefläche 41 ist zur Längsmittelachse 43 des Grundkörpers 25 hin geneigt, so dass die Formvorsprünge 29, die lose in die Führungen 28 eingelegt sind, selbständig an der Auflagefläche 41 in Richtung Längsmittelachse 43 herabgleiten können. An die Auflagefläche 41 angrenzend sind seitliche und in Entformungsrichtung ausgerichtete Führungsflächen 46 vorgesehen, welche die Formvorsprünge 29 führen, damit diese innerhalb der Führung 28 ausschließlich auf und ab bewegbar und/oder schwenkbar vorgesehen sind. Die Führungsflächen 46 von zwei benachbarten Führungen 28 grenzen aneinander und bilden mit einem Abschnitt 47 einer Mantelfläche 48 des Grundkörpers 25 eine Säule 49. An einer Oberseite der Säule 49 ist eine Stirnfläche 51 ausgebildet, auf der die Stirnplatte 35 der Niederhalteeinrichtung 31 in einer Arbeitsposition 33 der Formvorsprünge 29 aufliegt. Dadurch ist eine definierte Position der Niederhalteeinrichtung 31 in einer Arbeitsposition 33 der Formvorsprünge 29 gewährleistet.

Die Auflagefläche 41 der Führung 28 weist vorteilhafterweise an dessen freien nach oben ragenden Ende eine glockenförmige Geometrie auf. Diese zusätzliche Fläche dient zur Abstützung der Formvorsprünge 29 in einer Arbeitsposition 33 während dem Vakuumformen der Trägerplatte 12 aus einer Kunststofffolie. Die Auflagefläche 41 erstreckt sich in Richtung Längsmittelachse 43 im Wesentlichen nahe oder bis zur Bohrung 53, in welcher der Schaft 36 der Niederhalteeinrichtung 31 längsverschieblich geführt ist.

In Figur 3 ist eine Draufsicht auf den Grundkörper 25 gemäß Figur 2 dargestellt. In dieser Draufsicht ist ein Ausschnitt einer Basisplatte 14 dargestellt, der zeigt, dass die Formzapfen 16 rasterförmig zueinander angeordnet sind. Dabei können die in den Führungen 28 vorgesehenen Formvorsprünge 29, wie im Ausführungsbeispiel dargestellt ist, entlang einer Diagonalen eines Rasters angeordnet sein. Alternativ können die Formvorsprünge 29 auch entlang der Rasterlinien ausgerichtet sein.

Bei beispielsweise einer einstückigen Ausgestaltung des Grundkörpers 25 mit der Basisplatte 14 sind Übergangsbereiche 56 vorgesehen, die einen Übergang mit einem Radius bilden. Um diesem Übergangsbereich 56 herum sind bevorzugt Durchgangskanäle 57 vorgesehen, die ermöglichen, dass unmittelbar im Bereich der Mantelfläche 48 des Formzapfens 16 die Erzeugung eines Vakuums unterstützt wird.

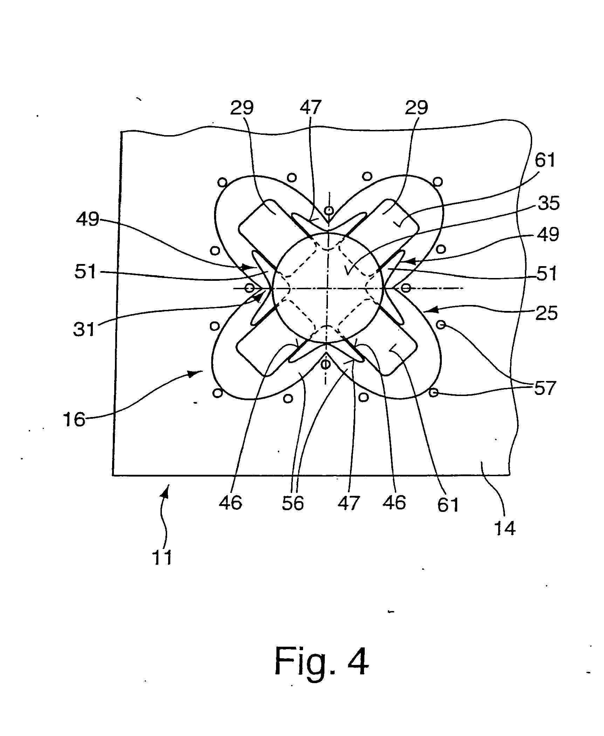

In Figur 4 ist eine Draufsicht auf einen Formzapfen 16 dargestellt, bei dem der Grundkörper 25 mit den Formvorsprüngen 29 und der Niederhalteeinrichtung 31 komplettiert ist. Die Stirnplatte 35 übergreift teilweise die Stirnfläche 51 der Säule 49 als auch Angriffsflächen 61 der Formvorsprünge 29.

Die Formvorsprünge 29 weisen, wie in Figur 1 in einer Seitenansicht dargestellt ist, einen keilförmigen Körper auf. Eine Abstützfläche 42 liegt einer Anlagefläche 63 in einem Winkel gegenüber, der kleiner als ein zwischen der Auflagefläche 41 der Führung 28 und dem Schaft 36 gebildeter Winkel ausgebildet ist. Der Schaft 36 der Niederhalteeinrichtung 31 begrenzt die Führung 28 zur Längsmittelachse 43 hin. Dadurch ist ein innerhalb des Grundkörpers 25 gebildeter Bewegungsraum ausgebildet, der durch die Auflagefläche 41 und die Führungsflächen 46 sowie durch den Schaft 36 und die Stirnplatte 35 begrenzt ist. Zwischen der Angriffsfläche 61 und der Abstützfläche 42 des Formvorsprunges 29 ist ein mit einem Radius versehener Übergangsbereich 65 ausgebildet, damit der lose in die Führung 28 eingesetzte Formvorsprung 29 schwenkbeweglich und/oder verschiebbar gelagert ist, wodurch die Entformung, wie nachfolgend in Figur 5 beschrieben ist, unterstützt wird. Die Angriffsfläche 61 des Formvorsprunges ist beispielsweise in dem von der Stirnplatte 35 übergriffenen Bereich parallel ausgebildet. Bevorzugt ist die Angriffsfläche 61 als Ebene ausgebildet, damit ein leichtes Gleiten der Angriffsfläche 61 entlang einer dieser zugeordneten Kante der Stirnplatte 35 ermöglicht ist. Die Formvorsprünge 29 weisen aus dem Grundkörper 35 herausragende Nasen 67 auf, die entsprechend der gewünschten Geometrie der Hinterschneidung ausgebildet und geformt sind.

Die Formvorsprünge 29 können bevorzugt aus Kunststoff als Spritzgussteil ausgebildet sein. Alternativ können auch metallische Formvorsprünge eingesetzt werden.

In Figur 5 ist die Vorrichtung 11 während einer Entformungsphase beim Abheben in Entformungsrichtung einer mit Erhebungen 18 ausgebildeten Trägerplatte 12 dargestellt. Die Schnittdarstellung zeigt den Formzapfen 16 mit dessen Formvorsprüngen 29 in einer Entformungsposition 71. Zum Entformen der Trägerplatte 12 wird diese nach oben abgezogen, wobei die Formvorsprünge 29 durch die inneren Mantelflächen der Erhebungen 18 auf die Längsmittelachse 43 zubewegt werden. Dabei führen diese Formvorsprünge 29 vornehmlich eine Schwenkbewegung aus und werden auf den Schaft 36 zubewegt. Gleichzeitig wird der Schaft 36 nach oben bewegt, indem die Angriffsflächen 61 der Formvorsprünge 29 die Stirnplatte 35 nach oben verlagern. Diese Bewegung erfolgt mit zunehmender Rückstellkraft des Niederhalteelementes 39, wobei das beziehungsweise diese Niederhalteelemente 39 derart ausgebildet sind, dass ein leichtes Entformen der vakuumverformten Trägerplatte 12 ermöglicht ist und gleichzeitig während dem Vakuumverformen sichergestellt ist, dass die Formvorsprünge 29 in ihrer Arbeitsposition 33 angeordnet bleiben.

Die Niederhalteeinrichtung 31 kann des Weiteren ein elastisch nachgiebiges Element umfassen, das auf dem Schaft 36, insbesondere nahe der Stirnplatte 35, vorgesehen ist. Dadurch kann eine gedämpfte Bewegung der Formvorsprünge 29 sowohl beim Überführen aus der Arbeitsposition 33 in eine Entformungsposition 71 als auch umgekehrt ermöglicht sein. Dieses elastische Element kann als Schaumstoffelement oder dergleichen vorgesehen sein.

Die erfindungsgemäße Vorrichtung kann sowohl zum Vakuumformen als auch Tiefziehen einer Trägerplatte 12 aus einer Kunststofffolie eingesetzt werden, welche Erhebungen 18 gegenüber einer Auflageebene 21 aufweisen, die mit Hinterschneidungen 19 versehen sind. Solche Trägerplatten 12 können beispielsweise als Bauelement zur Aufnahme von Schlauch- oder Rohrleitungen in einem Fußboden-, Wand- oder Deckenaufbau vorgesehen sein. Dabei werden die Rohrleitungen für die Fußbodenheizung niedergehalten. Des Weiteren kann diese Vorrichtung zum Einsatz von Trägerplatten als Entkoppelungsmatte zwischen einem Estrich und einem Fußbodenbelag oder einem Wandbelag oder einer Betondecke und einem Estrich im Innen- oder Außenbereich vorgesehen sein. Diese Vorrichtung 11 ermöglicht die Verarbeitung von verschiedenen Dicken und Materialien von Kunststofffolien oder plattenförmigen Kunststoffen zur Herstellung einer Trägerplatte als auch verschieden große Erhebungen, die eine beliebige Anzahl von Hinterschneidungen umfasst.

## Patentansprüche

1. Vorrichtung zum Vakuumverformen einer Trägerplatte (12) aus einer Kunststofffolie mit aus einer Auflageebene (21) hervorstehenden, zumindest eine Hinterschneidung (19) aufweisenden Erhebungen (18), mit einer Basisplatte (14), die zumindest einen Formzapfen (16) aufweist, der aus einem mit der Basisplatte (14) verbundenen Grundkörper (25) und aus zumindest einem beweglich in dem Grundkörper (25) aufgenommenen Formvorsprung (29) gebildet ist, wobei der zumindest eine Formvorsprung (29) in einer Arbeitsposition (33) gegenüber einer äußeren Mantelfläche (48) des Grundkörpers (25) nach außen vorsteht und der zumindest eine Formvorsprung (29) lose in seiner Führung (28) des Grundkörpers (25) eingesetzt ist und eine Niederhalteeinrichtung (31) den zumindest einen in seine Führung (28) eingesetzten Formvorsprung (29) zwischen einer Arbeitsposition (33) und einer Entformungsposition (71) in der Führung (28) positioniert, **dadurch gekennzeichnet, dass** die Führung (28) des Formvorsprunges (29) in Entfernungsrichtung zum Entformen der Trägerplatte (12) ausgerichtete und parallel zueinander angeordnete Führungsflächen (46) aufweist, innerhalb der der Formvorsprung (29) verschiebbar oder schwenkbeweglich oder verschiebbar und schwenkbeweglich zu den Führungsflächen (46) geführt ist.

2. Vorrichtung nach Anspruch 1, **dadurch gekennzeichnet, dass** die Niederhalteeinrichtung (31) eine Stirnplatte (35) aufweist, die den zumindest einen Formvorsprung (29) teilweise übergreift und an einem sich in den Grundkörper (25) erstreckenden Schaft (36) vorgesehen ist.

3. Vorrichtung nach Anspruch 1 oder 2, **dadurch gekennzeichnet, dass** die Niederhalteeinrichtung (31) einen die Stirnplatte (35) aufweisenden Schaft (36) umfasst, der den Grundkörper (25) und die Basisplatte (14) vollständig durchquert und an dessen freien Ende zumindest ein Niederhalteelement (39) angreift.

4. Vorrichtung nach Anspruch 3, **dadurch gekennzeichnet, dass** das Niederhalteelement (39) ein Federelement, vorzugsweise ein druckbelastbares Federelement, ist.

5. Vorrichtung nach einem der vorhergehenden Ansprüche, **dadurch gekennzeichnet, dass** ein Schaft (36) der Niederhalteeinrichtung (31) die Führung (28) jedes Formvorsprunges (29) zur Längsmittelachse (43) des Formzapfens (16) begrenzt.

6. Vorrichtung nach einem der vorhergehenden Ansprüche, **dadurch gekennzeichnet, dass** die Führung (28) des Formvorsprunges (29) im Grundkörper (25) eine Auflagefläche (41) aufweist, die von einer über den Grundkörper (25) hinausstehenden Nase (67) des Formvorsprunges (29) in Richtung auf die Längsmittelachse (43) des Formzapfens (16) zur Basisplatte (14) abfallend geneigt ist.

7. Vorrichtung nach Anspruch 6, **dadurch gekennzeichnet, dass** eine Abstützfläche (42) des Formvorsprunges (29) sich in einer Arbeitsposition (33) auf der Auflagefläche (41) abstützt.

8. Vorrichtung nach einem der vorhergehenden Ansprüche, **dadurch gekennzeichnet, dass** der Formvorsprung (29) zum innenliegenden Ende der Führung (28) weisend, welches zwischen dem Auflageabschnitt (41) der Führung (28) und dem Schaft (36) der Niederhalteeinrichtung (31) gebildet ist, einen gerundeten Übergangsbereich (65) aufweist, der die Abstützfläche (42) mit einer gegenüberliegenden Anlagefläche (63) des Formvorsprunges (29) verbindet.

9. Vorrichtung nach einem der vorhergehenden Ansprüche, **dadurch gekennzeichnet, dass** zwischen einer Auflagefläche (41) der Führung (28) und einem Schaft (36) der Niederhalteeinrichtung (31) ein keilförmiger Bewegungsraum für den Formvorsprung (29) ausgebildet ist, dessen Anlagefläche (63) und Abstützfläche (42) in einem Winkel zueinander angeordnet sind, der kleiner als der Winkel zwischen den den keilförmigen Bewegungsraum bildenden Elementen ausgebildet ist.

10. Vorrichtung nach einem der vorhergehenden Ansprüche, **dadurch gekennzeichnet, dass** der zumindest eine Formvorsprung (29) außerhalb der Führung (28) im Grundkörper (25) an die Geometrie der Hinterschneidung (19) angepasste Freiformen aufweist.

11. Vorrichtung nach einem der vorhergehenden Ansprüche, **dadurch gekennzeichnet, dass** zwischen zwei in Entformungsrichtung verlaufenden Führungsflächen (46) von zwei zueinander benachbarten Führungen (28), die aneinander angrenzen, eine Säule (49) ausgebildet ist, an deren Stirnfläche (51) die Stirnplatte (35) der Niederhalteeinrichtung (31) in einer Arbeitsposition (33) anliegt.

12. Vorrichtung nach einem der vorhergehenden Ansprüche, **dadurch gekennzeichnet, dass** der zumindest eine Formvorsprung (29) eine in Richtung auf die freistehende Nase (67) weisende Angriffsfläche (61) aufweist, die sich unterhalb der Stirnplatte (35) der Niederhalteeinrichtung (31) in einer Arbeitsposition (33) und einer Entformungsposition (71) erstreckt.

13. Vorrichtung nach einem der vorhergehenden Ansprüche, **dadurch gekennzeichnet, dass** in einer Arbeitsposition des zumindest einen Formvorsprunges (29) die Angriffsfläche (61) des Formvorsprunges (29) zur Anlage an der Unterseite der Stirnplatte (35) der Niederhalteeinrichtung (31) ausgebildet ist und vorzugsweise parallel verlaufend in gleicher Ebene liegt wie die Stirnfläche (51) der Säule (49) ausgerichtet ist.

14. Vorrichtung nach einem der vorhergehenden Ansprüche, **dadurch gekennzeichnet, dass** zwischen dem Grundkörper (25) und der Basisplatte (14) ein Übergangsbereich (56) ausgebildet ist, und um den Übergangsbereich (56) herum eine Vielzahl von die Basisplatte (14) durchquerender Durchgangskanäle (57) vorgesehen sind.

15. Vorrichtung nach einem der vorhergehenden Ansprüche, **dadurch gekennzeichnet, dass** eine Bohrung (53) in der Basisplatte (14) als Führung des Schaftes (36) der Niederhalteeinrichtung (31) ausgebildet ist.

16. Vorrichtung nach einem der vorhergehenden Ansprüche, **dadurch gekennzeichnet, dass** am Schaft (36) der Niederhalteeinrichtung (31) zumindest abschnittsweise ein elastisches Element, vorzugsweise ein Schaumstoff, vorgesehen ist.

## Claims

1. Apparatus for the vacuum forming of a carrier plate (12) from a plastics sheet with elevations (18) which project from a support plane (21) and have at least one undercut (19), comprising a base plate (14), which has at least one forming pin (16) formed from a basic element (25) connected to the base plate (14) and from at least one forming projection (29) movably accommodated in the basic element (25), wherein the at least one forming projection (29) in a working position (33) projects outwards relative to an outer shell surface (48) of the basic element (25), and the at least one forming projection (29) is loosely inserted in its guide (28) of the basic element (25) and a hold-down device (31) positions the at least one forming projection (29) inserted in its guide (28) between a working position (33) and a demoulding position (71) in the guide (28), **characterized in that** the guide (28) of the forming projection (29) has guide surfaces (46), which are aligned in the direction of removal for the demoulding of the carrier plate (12) and are arranged parallel to each and within which the forming projection (29) is guided displaceably or pivotably, or displaceably and pivotably, with respect to the guide surfaces (46).

2. Apparatus according to Claim 1, **characterized in that** the hold-down device (31) has an end plate (35), which partially overlaps at least one forming projection (29) and is provided on a shaft (36) extending into the basic element (25).

3. Apparatus according to Claim 1 or 2, **characterized in that** the hold-down device (31) comprises a shaft (36), which has the end plate (35) and fully traverses the basic element (25) and the base plate (14) and the free end of which is acted upon by at least one hold-down element (39).

4. Apparatus according to Claim 3, **characterized in that** the hold-down element (39) is a spring element, preferably a pressure-resistant spring element.

5. Apparatus according to one of the preceding claims, **characterized in that** a shaft (36) of the hold-down device (31) delimits the guide (28) of each forming projection (29) with respect to the longitudinal centre axis (43) of the forming pin (16).

6. Apparatus according to one of the preceding claims, **characterized in that** the guide (28) of the forming projection (29) in the basic element (25) has a support surface (41), which is angled such that it slopes down from a nose (67) of the forming projection (29), which nose projects beyond the basic element (25), in the direction of the longitudinal centre axis (43) of the forming pin (16) to the base plate (14).

7. Apparatus according to Claim 6, **characterized in that** a supporting surface (42) of the forming projection (29) is supported in a working position (33) on the support surface (41).

8. Apparatus according to one of the preceding claims, **characterized in that** the forming projection (29), pointing to the inner end of the guide (28), which end is formed between the support portion (41) of the guide (28) and the shaft (36) of the hold-down device (31), has a rounded transition region (65), which connects the supporting surface (42) to an opposite contact surface (63) of the forming projection (29).

9. Apparatus according to one of the preceding claims, **characterized in that** between a support surface (41) of the guide (28) and a shaft (36) of the hold-down device (31) there is formed a wedge-shaped motional space for the forming projection (29), the contact surface (63) and supporting surface (42) of which are arranged at an angle to each other which is smaller than the angle between the elements forming the wedge-shaped motional space.

10. Apparatus according to one of the preceding claims, **characterized in that** the at least one forming projection (29) has outside the guide (28) in the basic element (25) flexible forms matched to the geometry of the undercut (19).

11. Apparatus according to one of the preceding claims, **characterized in that** between two guide surfaces (46) of two mutually adjacent, adjoining guides (28) running in the demoulding direction, a pillar (49) is formed, the end face (51) of which is borne against by the end plate (35) of the hold-down device (31) in a working position (33).

12. Apparatus according to one of the preceding claims, **characterized in that** the at least one forming projection (29) has a working surface (61) which points in the direction of the free-standing nose (67) and which extends beneath the end plate (35) of the hold-down device (31) in a working position (33) and a demoulding position (71).

13. Apparatus according to one of the preceding claims, **characterized in that** in a working position of the at least one forming projection (29) the working surface (61) of the forming projection (29) is configured to bear against the bottom side of the end plate (35) of the hold-down device (31) and preferably lies in the same plane, in parallel-running arrangement, as that in which the end face (51) of the pillar (49) is aligned.

14. Apparatus according to one of the preceding claims, **characterized in that** between the basic element (25) and the base plate (14) there is formed a transition region (56), and around the transition region (56) there are provided a multiplicity of through-ducts (57) traversing the base plate (14).

15. Apparatus according to one of the preceding claims, **characterized in that** a bore (53) in the base plate (14) is configured as a guide of the shaft (36) of the hold-down device (31).

16. Apparatus according to one of the preceding claims, **characterized in that** on the shaft (36) of the hold-down device (31), at least in some sections, an elastic element, preferably a foam plastic, is provided.

## Revendications

1. Dispositif de formage sous vide d'une plaque de support (12) en feuille de plastique avec des rehaussements (18) saillants hors d'un plan d'appui (21), présentant au moins une contre-dépouille (19), avec une plaque de base (14), qui présente au moins un tourillon de formage (16) qui est formé à partir d'un corps de base (25) connecté à la plaque de base (14) et d'au moins une saillie de formage (29) reçue de manière mobile dans le corps de base (25), l'au moins une saillie de formage (29) dépassant vers l'extérieur dans une position de travail (33) par rapport à une surface d'enveloppe extérieure (48) du corps de base (25) et l'au moins une saillie de formage (29) étant insérée lâchement dans son guide (28) du corps de base (25) et un dispositif de serre-flan (31) positionnant dans le guide (28) l'au moins une saillie de formage (29) insérée dans son guide (28) entre une position de travail (33) et une position de démoulage (71), **caractérisé en ce que** le guide (28) de la saillie de formage (29) présente des surfaces de guidage (46) orientées dans la direction d'éloignement pour le démoulage de la plaque de support (12) et disposées parallèlement les unes aux autres, à l'intérieur desquelles la saillie de formage (29) est guidée de manière déplaçable ou pivotante, ou déplaçable et pivotante par rapport aux surfaces de guidage (46).

2. Dispositif selon la revendication 1, **caractérisé en ce que** le dispositif de serre-flan (31) présente une plaque frontale (35) qui vient en prise par le dessus en partie avec l'au moins une saillie de formage (29) et qui est prévue sur un arbre (36) s'étendant dans le corps de base (25).

3. Dispositif selon la revendication 1 ou 2, **caractérisé en ce que** le dispositif de serre-flan (31) comprend un arbre (36) présentant la plaque frontale (35), qui traverse complètement le corps de base (25) et la plaque de base (4), et à l'extrémité libre duquel vient en prise au moins un élément de serre-flan (39).

4. Dispositif selon la revendication 3, **caractérisé en ce que** l'élément de serre-flan (39) est un élément de ressort, de préférence un élément de ressort pouvant être sollicité en pression.

5. Dispositif selon l'une quelconque des revendications précédentes, **caractérisé en ce qu'**un arbre (36) du dispositif de serre-flan (31) limite le guide (28) de chaque saillie de formage (29) par rapport à l'axe médian longitudinal (43) du tourillon de formage (16).

6. Dispositif selon l'une quelconque des revendications précédentes, **caractérisé en ce que** le guide (28) de la saillie de formage (29) présente dans le corps de base (25) une surface d'appui (41) qui est inclinée en descendant depuis un ergot (67) de la saillie de formage (29) saillant au-delà du corps de base (25), dans la direction de l'axe médian longitudinal (43) du tourillon de formage (16) par rapport à la plaque de base (14).

7. Dispositif selon la revendication 6, **caractérisé en ce qu'**une surface de support (42) de la saillie de formage (29) s'appuie dans une position de travail (33) sur la surface d'appui (41).

8. Dispositif selon l'une quelconque des revendications précédentes, **caractérisé en ce que** la saillie de formage (29), tournée vers l'extrémité intérieure du guide (28), qui est formée entre la portion d'appui (41) du guide (28) et l'arbre (36) du dispositif de serre-flan (31), présente une région de transition arrondie (65) qui relie la surface de support (42) à une surface de butée (63) opposée de la saillie de formage (29).

9. Dispositif selon l'une quelconque des revendications précédentes, **caractérisé en ce qu'**entre une surface d'appui (41) du guide (28) et un arbre (36) du dispositif de serre-flan (31) est réalisé un espace de déplacement en forme de coin pour la saillie de formage (29), dont la surface de butée (63) et la surface de support (42) sont disposées l'une par rapport l'autre suivant un angle qui est inférieur à l'angle entre les éléments formant l'espace de déplacement en forme de coin.

10. Dispositif selon l'une quelconque des revendications précédentes, **caractérisé en ce que** l'au moins une saillie de formage (29) présente en dehors du guide (28) dans le corps de base (25) des formes libres adaptées à la géométrie de la contre-dépouille (19).

11. Dispositif selon l'une quelconque des revendications précédentes, **caractérisé en ce qu'**entre deux surfaces de guidage (46) s'étendant dans la direction de démoulage, de deux guides (28) adjacents l'un à l'autre, qui sont juxtaposés, est réalisée une colonne (49), contre la surface frontale (51) de laquelle s'applique la plaque frontale (35) du dispositif de serre-flan (31), dans une position de travail (33).

12. Dispositif selon l'une quelconque des revendications précédentes, **caractérisé en ce que** l'au moins une saillie de formage (29) présente une surface d'engagement (61) tournée dans la direction de l'ergot saillant (67), qui s'étend sous la plaque frontale (35) du dispositif de serre-flan (31) dans une position de travail (33) et une position de démoulage (71).

13. Dispositif selon l'une quelconque des revendications précédentes, **caractérisé en ce que** dans une position de travail de l'au moins une saillie de formage (29), la surface d'engagement (61) de la saillie de formage (29) est réalisée pour buter contre le côté inférieur de la plaque frontale (35) du dispositif de serre-flan (31) et se situe de préférence dans le même plan que la surface frontale (51) de la colonne (49).

14. Dispositif selon l'une quelconque des revendications précédentes, **caractérisé en ce qu'**entre le corps de base (25) et la plaque de base (14) est réalisée une région de transition (56) et une pluralité de canaux de passage (57) traversant la plaque de base (14) sont prévus autour de la région de transition (56).

15. Dispositif selon l'une quelconque des revendications précédentes, **caractérisé en ce qu'**un alésage (53) est pratiqué dans la plaque de base (14) sous forme de guide de l'arbre (36) du dispositif de serre-flan (31).

16. Dispositif selon l'une quelconque des revendications précédentes, **caractérisé en ce qu'**un élément élastique, de préférence une mousse est prévu(e) sur l'arbre (36) du dispositif de serre-flan (31) au moins sur une partie.
